# EUROPÄISCHE PATENTANMELDUNG

(11) **EP 4 289 532 A1**
(43) Veröffentlichungstag der Anmeldung: **13.12.2023**
(21) Anmeldenummer: 22177447.4
(22) Anmeldetag: 07.06.2022
(51) Int. Cl.: B23B 31/11, B23B 51/04, B23B 45/02

(54) **VERFAHREN ZUM LÖSEN UND ANZIEHEN EINER SCHRAUBVERBINDUNG ZWISCHEN EINEM KERNBOHRGERÄT UND EINER BOHRKRONE, UND KERNBOHRGERÄT**

(71) Anmelder: Hilti Aktiengesellschaft, 9494 Schaan (LI)
(72) Erfinder: Ringler, Stefan, 86853 Schwabmühlhausen (DE)
(74) Vertreter: Hilti Aktiengesellschaft Corporate Intellectual Property

(57) **Zusammenfassung**

Die vorliegende Erfindung betrifft ein Verfahren zum Anziehen oder Lösen einer Schraubverbindung (6) zwischen einem Kernbohrgerät (1) und einer Bohrkrone (2), wobei das Kernbohrgerät (1) eine Bohrkrone (2) und einen Motor (5) umfasst, wobei die Bohrkrone zu einer Bewegung in einer ersten Drehrichtung veranlasst werden kann, während durch eine Ansteuerung des Motors während des Werkzeugwechsels ein Gegendrehmoment erzeugt wird, um den Drehverschluss zwischen dem Kernbohrgerät und der Bohrkrone anzuziehen oder zu lösen. In einem zweiten Aspekt betrifft die Erfindung ein Kernbohrgerät (1) zur Durchführung des vorgeschlagenen Verfahrens.

## Beschreibung

Die vorliegende Erfindung betrifft ein Verfahren zum Anziehen oder Lösen einer Schraubverbindung zwischen einem Kernbohrgerät und einer Bohrkrone, wobei das Kernbohrgerät eine Bohrkrone und einen Motor umfasst, wobei die Bohrkrone zu einer Bewegung in einer ersten Drehrichtung veranlasst werden kann, während durch eine Ansteuerung des Motors während des Werkzeugwechsels ein Gegendrehmoment erzeugt wird, um den Drehverschluss zwischen dem Kernbohrgerät und der Bohrkrone anzuziehen oder zu lösen. In einem zweiten Aspekt betrifft die Erfindung ein Kernbohrgerät zur Durchführung des vorgeschlagenen Verfahrens. Durch die Ansteuerung des Motors des Kernbohrgeräts kann der Motor dazu veranlasst werden, gegen die Bewegung der Bohrkrone in der ersten Drehrichtung anzuarbeiten. Dadurch kann eine Differenz zwischen dem Drehmoment in die erste Drehrichtung und dem Gegendrehmoment durch die Ansteuerung des Motors erheblich vergrößert werden.

### Hintergrund der Erfindung:

Im Stand der Technik sind Kernbohrgeräte bekannt, mit denen im Wesentlichen zylinderförmige Bohrkerne aus zu bearbeitenden Untergründen, wie Mauerwerk, Kalksandstein oder Beton, herausgeschnitten werden können. In den im Wesentlichen zylinderförmigen Bohrlöchern können dann beispielsweise Leitungen oder Rohre verlegt oder eingesetzt werden. Die Kernbohrgeräte können mit Bohrkronen verbunden sein, wobei die Bohrkronen in den Untergrund hineingetrieben werden, um den Bohrkern herauszuschneiden.

Bei konventionellen Bohrsystemen aus Kernbohrgerät und Bohrkrone werden Schraubverbindungen verwendet, um die Bohrkrone an dem Kernbohrgerät zu befestigen. Durch die beim Bohren aufgebrachten großen Kräfte kann es vorkommen, dass eine solche Schraubverbindung unter Umständen nur sehr schwer zu lösen ist. Dies kann insbesondere dann der Fall sein, wenn zusätzlich Korrosion auftritt und die Bohrkrone für längere Zeit nicht von dem Kernbohrgerät getrennt wurde.

Im Stand der Technik sind im Wesentlichen drei Vorgehensweisen bekannt, um solche schwer lösbaren Verbindungen zwischen einem Kernbohrgerät und eine Bohrkrone zu lösen. Beispielsweise ist es im Stand der Technik bekannt, mehrere Hilfsmittel, wie Schraubenschlüssel mit langen Hebeln, zu verwenden, um die für die Trennung von Kernbohrgerät und Bohrkrone erforderlichen Kräfte zu erzeugen. Dabei wird je ein Schraubenschlüssel an dem Kernbohrgerät und an der Bohrkrone angesetzt, wobei die Hebelwirkung durch den zusätzlichen Einsatz von Rohren oder Stangen verbessert werden kann. Diese Vorgehensweise ist mit dem offensichtlichen Nachteil verbunden, dass die entsprechenden Hilfsmittel jeweils mitgeführt werden müssen und leicht verloren gehen können.

Eine andere Möglichkeit, das Lösen einer Schraubverbindung zwischen Kernbohrgerät und Bohrkrone zu erleichtern, besteht in der Verwendung von sogenannten «Leichtlöseringen». Dabei handelt es sich um Kupfer- und/oder Gummischeiben, die zwischen Kernbohrgerät und Bohrkrone angebracht werden können. Solche Leichtlöseringe sind allerdings mit dem Nachteil verbunden, dass eine Steifigkeit des Bohrsystems aus Kernbohrgerät und Bohrkrone durch ihren Einsatz reduziert wird. Eine reduzierte Systemsteifigkeit kann aber zu Schwierigkeiten beim Anbohren, d.h. beim Start eines Bohrvorgangs, führen.

Eine dritte Möglichkeit, das Lösen einer Schraubverbindung zwischen Kernbohrgerät und Bohrkrone zu erleichtern, besteht in einem großzügigen Einsatz von Schmierstoff. Diese Methode ist aber wegen der offensichtlichen Nachteile, wie Materialverbrauch und Verschmutzungen, nicht geeignet, eine langfristige befriedigende technische Lösung für die Trennung der Bohrkrone von dem Kernbohrgerät darzustellen.

Die Aufgabe, die der vorliegenden Erfindung zugrunde liegt, besteht daher darin, die vorstehend beschriebenen Mängel und Nachteile des Standes der Technik zu überwinden und ein Verfahren und ein Kernbohrgerät bereitzustellen, die ein besonders einfaches Anziehen oder Lösen von Kernbohrgerät und Bohrkrone ermöglichen. Die Lösung soll insbesondere einfach in der Handhabung sein und zu keinen zusätzlichen Verschmutzungen der Baustelle führen. Vor allem soll mit der Erfindung das Verbinden oder Lösen der Bohrkrone von dem Kernbohrgerät mit möglichst wenigen zusätzlichen Hilfsmitteln, wie Schraubenschlüssel und/oder Rohre, ermöglicht werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Anziehen oder Lösen einer Schraubverbindung zwischen einem Kernbohrgerät und einer Bohrkrone vorgesehen, wobei das Verfahren die folgenden Verfahrensschritte umfasst:
a) Bereitstellung eines Kernbohrgeräts mit
   - einer Bohrkrone, die bei Betrieb des Kernbohrgeräts an dem Kernbohrgerät mittels einer Schraubverbindung befestigt vorliegt, und
   - einem Motor, der dazu eingerichtet ist, ein Drehmoment zum Antrieb der Bohrkrone zu erzeugen,
b) Bewegung der Bohrkrone in einer ersten Drehrichtung, während durch eine Ansteuerung des Motors ein Gegendrehmoment erzeugt wird, um die Schraubverbindung zwischen dem Kernbohrgerät und der Bohrkrone anzuziehen oder zu lösen.

Die Grundidee der Erfindung beruht auf dem Zusammenspiel zwischen der Bewegung der Bohrkrone in einer ersten Drehrichtung A, die einer Richtung B des Gegendrehmoment entgegengesetzt ist. Das Gegendrehmoment, das im Sinne der Erfindung bevorzugt auch als Gegenhaltemoment bezeichnet wird, wird vorzugsweise durch eine Ansteuerung des Motors des Kernbohrgeräts während des Werkzeugwechsels erzeugt. Der Begriff «Werkzeugwechsel» bezeichnet im Kontext der vorliegenden Erfindung bevorzugt das Lösen der Bohrkrone von dem Kernbohrgerät, beispielsweise um die Bohrkrone auszutauschen. Beim Werkzeugwechsel wird vorzugsweise die zwischen Bohrkrone und Kernbohrgerät bestehende Schraubverbindung gelöst, wobei die Schraubverbindung zwischen Bohrkrone und Kernbohrgerät Im Kontext der vorliegenden Erfindung bevorzugt auch als «Drehverschluss» bezeichnet wird. Durch die Ansteuerung des Motors des Kernbohrgeräts, bei der das Gegendrehmoment erzeugt wird, kann eine Möglichkeit zur vereinfachten Trennung der Bohrkrone von dem Kernbohrgerät bereitgestellt werden. Es stellt einen wesentlichen Vorteil des vorgeschlagenen Verfahrens dar, dass ein Lösen der Schraubverbindung zwischen dem Kernbohrgerät und der Bohrkrone mit nur einem zusätzlichen Hilfsmittel, beispielsweise einem Schraubenschlüssel, ermöglicht werden kann. Ferner kann bei dem vorgeschlagenen Trennungsverfahren auf einen übermäßigen Einsatz von Schmierstoff verzichtet werden, so dass das vorgeschlagene Verfahren einen Beitrag zum kosten- und materialsparenden Arbeiten auf der Baustelle leistet. Darüber hinaus werden unnötige Verschmutzungen durch den Schmierstoff vermieden, so dass umfangreiche Reinigungsarbeiten der Baustelle verhindert werden können.

Neben dem Lösen der Schraubverbindung zwischen einem Kernbohrgerät und einer Bohrkrone kann mit dem vorgeschlagenen Verfahren die Bohrkrone auch mit dem Kernbohrgerät verbunden werden. Dieser Vorgang wird im Kontext der vorliegenden Erfindung als «Anziehen der Schraubverbindung» bezeichnet. Auch beim Anziehen der Schraubverbindung wird ausgenutzt, dass der Antrieb der Werkzeugmaschine keine Drehbewegung ausführt, sondern vielmehr blockiert wird, so dass auch das Anziehen der Schraubverbindung mit der Erfindung wesentlich vereinfacht werden kann.

Die Erfindung wendet sich darüber hinaus von konventionellen Trennungsverfahren, wie sie aus dem Stand der Technik bekannt sind, ab, indem der Motor durch eine gezielte Ansteuerung blockiert und anschließend die Bohrkrone mit einem Hilfsmittel, wie einem Schraubenschlüssel, gelöst werden kann. Die Blockierung des Motors erfolgt im Kontext der vorliegenden Erfindung vorzugsweise dadurch, dass bei der Ansteuerung des Motors eine Drehzahlsollvorgabe für den Motor bei 0 Drehungen pro Minute (rpm) liegt. Diese technische Lösung wendet sich beispielsweise von anderen Trennungsverfahren ab, bei denen eine bewusste Drehrichtungs-Änderung des Motors bewirkt wird, um beim Stoppen und/oder Bremsen des Motos eine Schwungmasse der Bohrkrone auszunutzen, um die Schraubverbindung bzw. den Drehverschluss zwischen dem Kernbohrgerät und der Bohrkrone zu lösen.

Es ist im Sinne der Erfindung bevorzugt, dass beim Werkzeugwechsel die Schraubverbindung bzw. den Drehverschluss zwischen dem Kernbohrgerät und der Bohrkrone gelöst bzw. gelockert wird, indem die Bohrkrone zu einer Bewegung in einer ersten Drehrichtung veranlasst wird, während durch eine Ansteuerung des Motors ein Gegendrehmoment erzeugt wird, mit dem die Bohrkrone gelöst bzw. gelockert werden kann.

Es ist im Sinne der Erfindung bevorzugt, dass die Ansteuerung des Motors des Kembohrgeräts bewirkt, dass der Motor gegen die Bewegung der Bohrkrone in der ersten Drehrichtung arbeitet. Dadurch versucht der Motor des Kernbohrgeräts, keine Drehbewegung der Bohrkrone zuzulassen; mit anderen Worten wird durch die Ansteuerung des Motors eine Drehbewegung der Bohrkrone verhindert. Auf diese Weise wird vorteilhafterweise eine mechanische Arretierung des Drehantriebs der Bohrkrone erreicht, die vorteilhafterweise dazu führt, dass der Verschlussmechanismus der Bohrkrone geschlossen werden kann. Das Schließen des Verschlussmechanismus der Bohrkrone führt vorteilhafterweise dazu, dass ein Mitdrehen des Motors des Kernbohrgeräts in die erste Drehrichtung verhindert wird. Stattdessen ist es im Kontext der vorliegenden Erfindung vorgesehen, dass die Ansteuerung des Motors bewirkt, dass der Motor gegen die Bewegung der Bohrkrone in der ersten Drehrichtung arbeitet. Durch die Arbeit des Motors des Kernbohrgeräts gegen die Bewegung der Bohrkrone in der ersten Drehrichtung kann vorteilhafterweise eine Differenz zwischen dem Drehmoment, das in die erste Drehrichtung gerichtet ist, und dem Gegendrehmoment, das durch die Ansteuerung des Motors erzeugt wird, vergrößert werden. Durch diese vergrößerte Drehmomentdifferenz kann das Lösen der Schraubverbindung zwischen dem Kernbohrgerät und der Bohrkrone wesentlich erleichtert werden, mithin überhaupt erst ermöglicht werden. Mit der Erfindung kann also ein üblicherweise manuell stattfindender Vorgang, wie das Lösen einer Bohrkrone vom Kembohrgerät, mit technischen Mitteln unterstützt und erheblich erleichtert werden, indem technische Möglichkeiten, wie das Ansteuern eines Motors oder die technische Erzeugung eines Gegendrehmoment bzw. eines Gegenhaltemoments, geschickt ausgenutzt werden.

Es ist im Sinne der Erfindung bevorzugt, dass die Ansteuerung des Motors des Kembohrgeräts eine Drehzahlregelung umfasst, wobei eine Drehzahlsollvorgabe für den Motor des Kernbohrgeräts bei 0 Drehungen pro Minute (rpm) liegt. Vorzugsweise kann auf diese Weise die Differenz zwischen dem Drehmoment in die erste Drehrichtung und dem Gegendrehmoment durch die Ansteuerung des Motors des Kembohrgeräts vergrößert werden. Es ist im Sinne der Erfindung bevorzugt, dass für das Lösen der Schraubverbindung zwischen dem Kernbohrgerät und der Bohrkrone nur ein zusätzliches Werkzeug, wie ein Schraubenschlüssel, erforderlich ist. Bei diesem Werkzeug kann es sich beispielsweise um einen Schraubenschlüssel handeln. Mit Hilfe des zusätzlichen Werkzeugs kann vorteilhafterweise der Drehverschluss der Bohrkrone angezogen oder gelöst werden, so dass die Bohrkrone von dem Kernbohrgerät entfernt werden kann. Vorteilhafterweise kann der Schraubenschlüssel an der Bohrkrone angesetzt werden, um die Bohrkrone von dem Kernbohrgerät zu lösen oder um die Bohrkrone mit dem Kernbohrgerät zu verbinden.

In einem zweiten Aspekt betrifft die Erfindung ein Kernbohrgerät, wobei das Kernbohrgerät dazu eingerichtet ist, das Verfahren nach einem der vorherigen Ansprüche durchzuführen. Die für das Trennungs-Verfahren eingeführten Begriffe, Definitionen und technischen Vorteile gelten vorzugsweise für das Kembohrgerät analog. Mit dem vorgeschlagenen Kembohrgerät kann eine technische Lösung bereitgestellt werden, mit der die Anzahl der für den Werkzeugwechsel erforderlichen Hilfsmittel, reduziert werden kann.

Es ist im Sinne der Erfindung bevorzugt, dass das Kernbohrgerät einen Motor umfasst, wobei der Motor des Kembohrgeräts dazu eingerichtet ist, ein Drehmoment zum Antrieb der Bohrkrone zu erzeugen, so dass die Bohrkrone zu einer Bewegung in eine ersten Drehrichtung veranlasst wird, während durch eine Ansteuerung des Motors ein Gegendrehmoment erzeugbar ist, um die Schraubverbindung zwischen dem Kernbohrgerät und der Bohrkrone zu lösen. Die Bohrkrone kann während des Betriebs des Kernbohrgeräts mit dem Kembohrgerät verbunden vorliegen, während die Bohrkrone in Nicht-Betriebszeiten des Kembohrgeräts beispielsweise getrennt aufbewahrt oder gelagert werden kann. Die Bohrkrone ist somit nicht fixer Bestandteil des Kernbohrgeräts, wie der Motor, sondern die Bohrkrone ist vorzugsweise dazu eingerichtet, mit dem Kernbohrgerät verbunden zu werden. Mithin ist die Bohrkrone mit dem Kernbohrgerät verbindbar, um Kernbohrungen durchzuführen und im Wesentlichen zylinderförmige Bohrkeme aus einem Untergrund herauszuschneiden. Die Ansteuerung des Motors zur Erzeugung des Gegendrehmoments erfolgt insbesondere während des Werkzeugwechsels, d.h. beim Lösen der Bohrkrone von dem Kernbohrgerät, mit dem es während des Betriebs des Kernbohrgeräts verbunden ist. Darüber hinaus kann die Ansteuerung des Motors zur Erzeugung des Gegendrehmoments beim Anziehen der Schraubverbindung zwischen der Bohrkrone und dem Kernbohrgerät erfolgen.

Es ist im Sinne der Erfindung bevorzugt, dass eine Richtung, in die das Gegendrehmoment orientiert ist bzw. zeigt, der ersten Drehrichtung der Bohrkrone entgegengerichtet ist. Vorzugsweise wird der Motor des Kernbohrgeräts so angesteuert, dass eine Drehzahlsollvorgabe für den Motor bei 0 Drehungen pro Minute (rpm) liegt. Die Einheit «Drehungen pro Minute» heißt im Englischen «rounds per minute» und wird mit der Abkürzung «rpm» abgekürzt. Dadurch wird vorteilhafterweise das Gegendrehmoment erzeugt, welches der Bewegung der Bohrkrone in der ersten Drehrichtung entgegengesetzt ist, so dass das Anziehen oder Lösen der Schraubverbindung bzw. des Drehverschlusses zwischen Kernbohrgerät und Bohrkrone erheblich erleichtert werden kann.

Es ist im Sinne der Erfindung bevorzugt, dass der Motor des Kembohrgeräts so ansteuerbar ist, dass der Motor gegen die Bewegung der Bohrkrone in der ersten Drehrichtung arbeitet. Zur Ansteuerung des Motors kann das Kernbohrgerät eine Steuereinrichtung oder eine Steuerelektronik umfassen, wobei die Steuereinrichtung und die Steuerelektronik dazu eingerichtet sind, den Motor des Kembohrgeräts so anzusteuern, dass eine Drehzahlsollvorgabe für den Motor des Kernbohrgeräts bei 0 Drehungen pro Minute (rpm) liegt. Alternativ oder ergänzend können die Steuereinrichtung und die Steuerelektronik dazu eingerichtet sein, den Motor des Kernbohrgeräts so anzusteuern, dass eine Differenz zwischen dem Drehmoment in die erste Drehrichtung und dem Gegendrehmoment vergrößert wird.

Das Kernbohrgerät wird vorzugsweise dadurch in die Lage versetzt, das vorgeschlagene Trennungs-Verfahren durchzuführen, indem eine gezielte Ansteuerung des Motors des Kernbohrgeräts erfolgt, mit der ein Gegendrehmoment erzeugt wird, das den Werkzeugwechsel wesentlich erleichtert.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

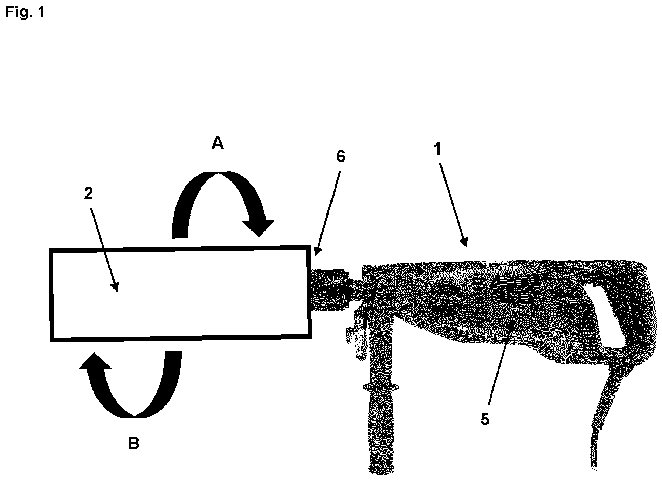

- Fig. 1: Ansicht einer bevorzugten Ausgestaltung der Erfindung

### Ausführungsbeispiele und Figurenbeschreibung:

Figur 1 zeigt ein vorgeschlagenes Kernbohrgerät 1, mit dem das vorgeschlagene Verfahren zur Verbindung oder Trennung einer Bohrkrone 2 von einem Kernbohrgerät 1 durchgeführt werden kann. Die Verbindung zwischen dem Kernbohrgerät 1 und der Bohrkrone 2 wird insbesondere von einer Schraubverbindung 6 gebildet. Das Kernbohrgerät 1 ist während seines Betriebs, d.h. wenn es zum Herausschneiden von Bohrkernen aus einem Untergrund eingesetzt wird, mit einer Bohrkrone 2 verbunden, wobei die Bohrkrone 2 in den Untergrund hineingetrieben wird, um den Bohrkern herauszuschneiden. Dazu wird die Bohrkrone 2 von einem Motor 5 des Kernbohrgeräts 1 zu einer Drehbewegung veranlasst. Es ist vorgesehen, dass die Bohrkrone 2 während des Werkzeugwechsels in eine erste Drehrichtung A gedreht wird, um die Bohrkrone 2 von dem Kernbohrgerät 1 zu lösen. Darüber hinaus kann die Drehbewegung des Motors 5 des Kernbohrgeräts 1 auch dazu verwendet werden, die Schraubverbindung zwischen der Bohrkrone 2 und dem Kernbohrgerät 1 anzuziehen, d.h. die Bohrkrone 2 mit dem Kernbohrgerät 1 zu verbinden. Das bedeutet im Sinne der Erfindung bevorzugt, dass sich die Bohrkrone 2 beispielsweise in einem Uhrzeigersinn dreht. Während des Werkzeugwechsels ist eine Ansteuerung des Motors 5 des Kernbohrgeräts 1 vorgesehen, wobei mit der Ansteuerung des Motors 5 ein Gegendrehmoment erzeugt wird, wobei das Gegendrehmoment in eine zweite Drehrichtung B orientiert ist bzw. in eine zweite Drehrichtung B zeigt. Mögliche Beispiele für eine erste Drehrichtung A und eine zweite Drehrichtung B sind in der Fig. 1 schematisch mit Pfeilen angedeutet. In der realen Verwirklichung der Erfindung können die Drehrichtungen A, B selbstverständlich auch vertauscht sein.

Nach erfolgter Arbeit bzw. für einen Transport des Kernbohrgeräts 1 kann es erforderlich oder gewünscht sein, dass die Bohrkrone 2 von dem Kernbohrgerät 1 entfernt wird. Dazu sieht die vorliegende Erfindung vor, dass der Motor 5 des Kernbohrgeräts 1 durch eine gezielte Ansteuerung mit einer Drehzahlsollvorgabe mit 0 rpm blockiert wird. Durch die gezielte Ansteuerung des Motors 5 des Kernbohrgeräts 2 kann eine Differenz zwischen dem Drehmoment, das beispielsweise in die erste Drehrichtung A zeigt, und dem Gegendrehmoment, das beispielsweise in die zweite Drehrichtung B zeigt, vergrößert werden, so dass eine Trennung der Bohrkrone 2 von dem Kernbohrgerät 1 erheblich erleichtert werden kann.

### Bezugszeichenliste

- 1: Kernbohrgerät
- 2: Bohrkrone
- 5: Motor des Kernbohrgeräts
- 6: Schraubverbindung
- A: erste Drehrichtung der Bohrkrone beim Werkzeugwechsel
- B: zweite Drehrichtung des Gegendrehmoments

## Patentansprüche

1. Verfahren zum Anziehen oder Lösen einer Schraubverbindung (6) zwischen einem Kernbohrgerät (1) und einer Bohrkrone (2)
**gekennzeichnet durch die folgenden Verfahrensschritte:**
a) Bereitstellung eines Kernbohrgeräts (1) mit
- einer Bohrkrone (2), die bei Betrieb des Kernbohrgeräts (1) an dem Kernbohrgerät (1) mittels einer Schraubverbindung (6) befestigt vorliegt, und
- einem Motor (5), der dazu eingerichtet ist, ein Drehmoment zum Antrieb der Bohrkrone (2) zu erzeugen,
b) Bewegung der Bohrkrone (2) in einer ersten Drehrichtung, während eine Ansteuerung des Motors (5) ein Gegendrehmoment erzeugt wird, um die Schraubverbindung (6) zwischen dem Kernbohrgerät (1) und der Bohrkrone (2) anzuziehen oder zu lösen.

2. Verfahren nach Anspruch 1,
**dadurch gekennzeichnet, dass**
die Ansteuerung des Motors (5) des Kernbohrgeräts (1) bewirkt, dass der Motor (5) gegen die Bewegung der Bohrkrone (2) in der ersten Drehrichtung arbeitet.

3. Verfahren nach Anspruch 1 oder 2
**dadurch gekennzeichnet, dass**
die Ansteuerung des Motors (5) des Kernbohrgeräts (1) eine Drehzahlregelung umfasst, wobei eine Drehsollvorgabe für den Motor (5) des Kernbohrgeräts (1) bei 0 Drehungen pro Minute (rpm) liegt.

4. Verfahren nach einem der vorhergehenden Ansprüche
**dadurch gekennzeichnet, dass**
eine Differenz zwischen dem Drehmoment in die erste Drehrichtung und dem Gegendrehmoment durch die Ansteuerung des Motors (5) des Kernbohrgeräts (1) vergrößert wird.

5. Verfahren nach einem der vorhergehenden Ansprüche
**dadurch gekennzeichnet, dass**
für das Anziehen oder Lösen der Schraubverbindung (6) zwischen dem Kernbohrgerät (1) und der Bohrkrone (2) nur ein zusätzliches Werkzeug erforderlich ist.

6. Kernbohrgerät (1)
**dadurch gekennzeichnet, dass**
das Kernbohrgerät (1) dazu eingerichtet ist, das Verfahren nach einem der vorherigen Ansprüche durchzuführen.

7. Kernbohrgerät (1) nach Anspruch 6
**dadurch gekennzeichnet, dass**
das Kernbohrgerät (1) eine Bohrkrone (2) und einen Motor (5) umfasst, wobei der Motor (5) des Kembohrgeräts (1) dazu eingerichtet ist, ein Drehmoment zum Antrieb der Bohrkrone (2) zu erzeugen, so dass die Bohrkrone (2) zu einer Bewegung in eine ersten Drehrichtung veranlasst wird, während durch eine Ansteuerung des Motors (5) ein Gegendrehmoment erzeugbar ist, um die Schraubverbindung (6) zwischen dem Kernbohrgerät (1) und der Bohrkrone (2) anzuziehen oder zu lösen.

8. Kernbohrgerät (1) nach Anspruch 6 oder 7
**dadurch gekennzeichnet, dass**
der Motor (5) des Kernbohrgeräts (1) so ansteuerbar ist, dass der Motor (5) gegen die Bewegung der Bohrkrone (2) in der ersten Drehrichtung arbeitet.

9. Kernbohrgerät (1) nach einem der Ansprüche 6 bis 8
**dadurch gekennzeichnet, dass**
der Motor (5) des Kernbohrgeräts (1) so ansteuerbar ist, dass eine Drehsollvorgabe für den Motor (5) des Kernbohrgeräts (1) bei 0 Drehungen pro Minute (rpm) liegt.

10. Kernbohrgerät (1) nach einem der Ansprüche 6 bis 9
**dadurch gekennzeichnet, dass**
der Motor (5) des Kernbohrgeräts (1) so ansteuerbar ist, dass eine Differenz zwischen dem Drehmoment in die erste Drehrichtung und dem Gegendrehmoment vergrößert wird.
